Europäisches Patentamt

European Patent Office

Office européen des brevets

(11) Veröffentlichungsnummer: **0 303 147 B1**

(12) **EUROPÄISCHE PATENTSCHRIFT**

(45) Veröffentlichungstag der Patentschrift: **02.10.91**

(21) Anmeldenummer: **88112486.1**

(22) Anmeldetag: **01.08.88**

(51) Int. Cl.⁵: **F16C 25/08**, F16F 1/32

(54) **Gewellte Federscheibe.**

(30) Priorität: **12.08.87 DE 3726888**

(43) Veröffentlichungstag der Anmeldung:
**15.02.89 Patentblatt 89/07**

(45) Bekanntmachung des Hinweises auf die
Patenterteilung:
**02.10.91 Patentblatt 91/40**

(84) Benannte Vertragsstaaten:
**AT CH DE FR GB IT LI SE**

(56) Entgegenhaltungen:
**DE-A- 3 344 249**
**GB-A- 788 268**
**GB-A- 1 428 998**
**US-A- 4 645 361**

(73) Patentinhaber: **Siemens Aktiengesellschaft**
**Wittelsbacherplatz 2**
**W-8000 München 2(DE)**

(72) Erfinder: **Bormann, Jürgen**
**Estenfelder Strasse 29**
**W-8702 Rottendorf(DE)**

## Beschreibung

Die Erfindung bezieht sich auf eine gewellte Federscheibe gemäß Oberbegriff des Anspruches 1; eine derartige Federscheibe ist allgemein auch unter der Bezeichnung "Kugellager-Ausgleichsscheibe" bekannt und wird z.B. in der DE-A-33 44 249, FIG 5 beschrieben.

Die bekannten Federscheiben bestehen aus einem in Umfangsrichtung wellig verlaufenden (Federwellen) Scheibenring, der üblicherweise als gestanztes Blechteil hergestellt ist. Derartige Federscheiben dienen dazu, die Außenringe von Kugellagern gegenüber deren Innenringen derart zu belasten, daß in jedem Betriebszustand spielfreie definierte Laufbahnen für die Kugeln gewährleistet werden können; gleichzeitig können durch die sich an der das Kugellager aufnehmenden Lagernabe axial abstützende Federscheibe Axialspiele des auf der Welle gelagerten Rotorkörpers ausgeglichen werden, die durch Toleranzwerte der zusammengebauten Stator-Bauteile oder Betriebstemperaturwechsel bedingt sein können.

Bei der Montage eines in einem Statorkörper über Kugellager mit zwischengelegter Federscheibe gelagerten Rotorkörpers, z.B. eines Elektromotors, wird üblicherweise die bekannte Federscheibe zunächst in diejenige Lagernabe eingelegt, die das axial am Außenring zu befestigende Kugellager aufnimmt, wobei die Federscheibe mit ihrem Außenring in der Bohrungsaufnahme der Lagernabe zentrierbar ist. Eine derartige Zentrierung der Federscheibe an der Lagernabe ist jedoch nicht möglich, falls in sog. vertikaler Aufbaumontage die obere Lagernabe erst nach der vorherigen Montage des Kugellagers und der darauf aufzulegenden Federscheibe erfolgen kann. Man hat dazu bisher entweder in einer aufwendigen händischen Maßnahme oder mittels eines zusätzlichen übergestülpten Montagerohres die Federscheibe in ihre zum Kugellager justierte Lage gebracht. Derartige Maßnahmen eignen sich jedoch nicht als automatengerechte Fertigungsschritte.

Es ist daher Aufgabe der vorliegenden Erfindung, auf einfache, insbesondere zum Einsatz von Handhabungsautomaten geeignete Weise, eine gewellte Federscheibe zentriert zum axial zu verspannenden Kugellager ohne justierende Abstützungsmöglichkeit an einer das Kugellager aufnehmenden Lagernabe auflegen zu können.

Die Lösung dieser Aufgabe gelingt bei einer gewellten Federscheibe der eingangs genannten Art erfindungsgemäß durch die Lehre des Anspruches 1; vorteilhafte Ausgestaltungen der Erfindung sind jeweils Gegenstand der Unteransprüche.

Die erfindungsgemäße, vorteilhafterweise als einstückiges Stanz-Biege-Teil hergestellte Federscheibe kann bei der sogenannten vertikalen Aufbaumontage nach dem Aufstecken des zu verspannenden Kugellagers auf das zu lagernde Wellenende in einem einfachen Handhabungsvorgang ohne zentrierte Abstütznotwendigkeit an einer Lagernabe aufgesteckt werden, wobei sich die Federscheibe selbsttätig durch ihren inneren Zentrierring am Außenumfang der Welle zentriert.

Zweckmäßigerweise ist die Federscheibe derart ausgebildet, daß der innere Zentrierring ungewellt im Sinne einer planen axialen Lage ausgebildet ist und axial gegenüber dem Federscheiben-Außenring vorsteht; dadurch ergibt sich einerseits eine gleichmäßige Anlage gegenüber der andrükkenden Lageraufnahme und andererseits eine einfache Möglichkeit zur lagerichtigen Erkennung und Aufnahme der Federscheibe durch einen Handhabungsautomaten, derart daß der Zentrierrand auf der dem zu verspannenden Kugellager abgewandten Seite bei der Montage bzw. dem Überstreifen über das Wellenende zur Anlage kommt.

Ein zur einfachen Großserienfertigung vorteilhafter fertigungstechnisch geringer radialer Überstand der Federscheibe über den Außendurchmesser des zu verspannenden Kugellagers hinaus kann zugelassen werden, wenn nach einer Ausgestaltung der Erfindung der Federscheibe an der überzustülpenden Lagernabe an ihrer lagerseitigen Öffnung eine konische Anfasung zugeordnet ist, derart daß die Federscheibe über die Anfasung bei der axialen Montage der Lageraufnahme zusätzlich zentrierbar ist.

Eine unerwünschte betriebsmäßige Anlage des Zentrierringes an der beim Aufstecken als Zentrierhilfe benutzten Welle und insbesondere ein bei Drehung der Welle unerwünschtes tangentiales Schleifen der Federscheibe über den Zentrierring an der Welle kann in vorteilhafter Weise durch derartige Durchmessermaße der Federscheibe verhindert werden, daß die Differenz zwischen dem Innendurchmesser des Federscheiben-Zentrierringes und dem Außendurchmesser der Welle größer ist als die Differenz zwischen dem Innendurchmesser der Lagernabe und dem Außendurchmesser des Federscheiben-Außenringes.

Die Erfindung sowie weitere vorteilhafte Ausgestaltungen der Erfindung werden im folgenden anhand eines schematisch dargestellten Ausführungsbeispieles in der Zeichnung näher erläutert; darin zeigen:

FIG 1     eine axiale Draufsicht auf eine Federscheibe;

FIG 2     einen Schnitt durch die Federscheibe gemäß Schnittverlauf II-II in FIG 1;

FIG 3     eine Federscheibe in Anwendung auf eine axialvertikale Aufbaumontage eines Elektromotors mit unverspannter Federscheibe;

FIG 4     die Anordnung gemäß FIG 3, jedoch mit verspannter Federscheibe.

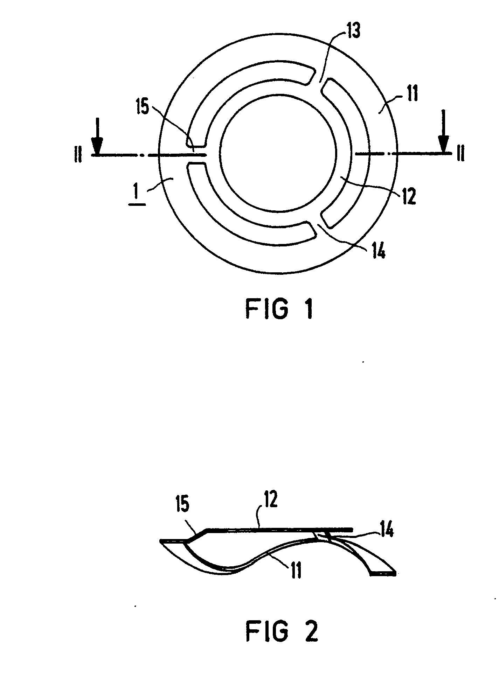

FIG 1,2 zeigen eine Federscheibe 1 mit einem gewellten Federscheiben-Außenring 11 und einem über radiale Verbindungsstege 13,14,15 verbundenen inneren Federscheiben-Zentrierring 12.

Die aus Federscheiben-Außenring 11, innerem Federscheiben-Zentrierring 12 und Verbindungsstege 13,14,15 bestehende Federscheibe 1 ist als einstückiges Stanz-Biege-Teil hergestellt.

Wie insbes. aus FIG 2 ersichtlich, tritt der innere Federscheiben-Zentrierring 12 gegenüber dem am Umfang mit Wellentälern und Wellenbergen umlaufenden Federscheiben-Außenring 12 axial einseitig hervor und ist selbst im Sinne einer planen Auflage eben ausgebildet. Die Verbindungsstege 13,14,15 verlaufen in einer radial-axialen Schräglage; sie können auch eine rein axiale Anordnung annehmen.

Für den eigentlichen Federscheiben-Zentrierring 12 kann ohne zusätzlichen Materialaufwand der bei den herkömmlichen Federscheiben mit lediglich einem gewellten Federscheiben-Außenring an sich ergebende Stanzabfall benutzt werden.

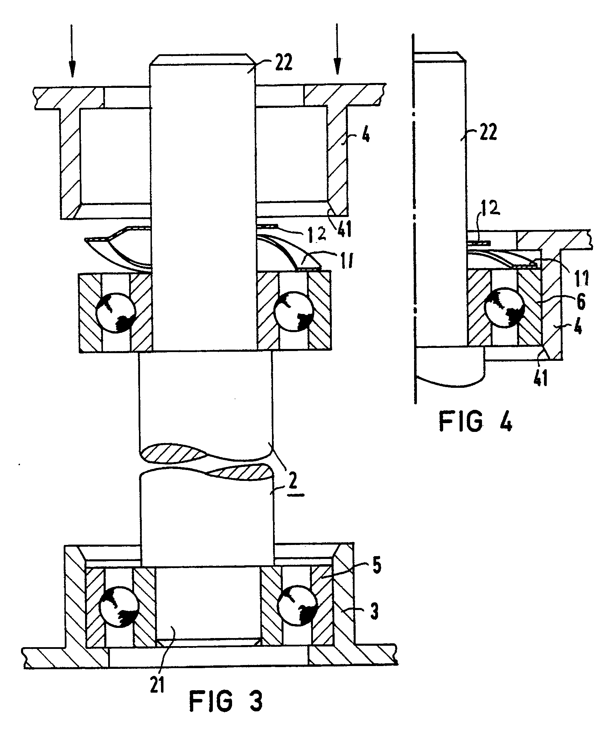

FIG 3 zeigt in einem schematischen Teilausschnitt die axialvertikale Aufbaumontage eines Elektromotors. In die erste untere Lagernabe 3 ist axial ein Kugellager 5 eingesteckt. Zwischen die Innenringe des Kugellagers 5 ist das untere Wellenende 21 der Rotorwelle 2 eingesteckt. Auf das obere Wellenende 22 der Rotorwelle 2 ist das zweite obere Kugellager 6 aufgesteckt. Über das obere Wellenende 22 ist weiterhin die erfindungsgemäße Federscheibe 1 aufgeschoben, die sich dabei mit ihrem inneren Federscheiben-Zentrierring 12 am Außenumfang des Wellenendes 22 zentriert und somit ohne Abstützmöglichkeit an der erst anschließend aufzusteckenden zweiten, oberen Lagernabe 4 zentriert auf dem oberen axialen Rand des Außenringes des zweiten, oberen Kugellagers 6 zur Auflage kommt.

FIG 4 zeigt den in Aufbaumontage zusammengesetzten Elektromotor nach dem Aufschieben der zweiten, oberen Lagernabe 4 in ihre endgültige Montagestellung. An dem lagerseitigen Ende der zweiten, oberen Lagernabe 4 ist eine sich konisch erweiternde Anfasung 41 vorgesehen, an der ein gegebenenfalls sich ergebender radialer Überstand der Federscheibe 1 über den Außenumfang des zweiten, oberen Kugellagers 6 hinaus bei der axialen Montage der zweiten, oberen Lagernabe 4 zentriert einleiten kann.

Die vorgenannten Verfahrensschritte ergeben unter Benutzung der erfindungsgemäßen Federscheibe mit ihrem Federscheiben-Zentrierring 12 eine mit geringem Aufwand mittels Handhabungsautomaten mögliche Montage des Elektromotors.

## Patentansprüche

1. Lageranordnung mit einer gewellten Federscheibe (1) zur axialen Verspannung eines Kugellagers (6), das radial außen mit seinem Lager-Außenring an einer Lagernabe (4) und radial innen mit seinem Lager-Innenring an einer Welle (2) anliegt, **dadurch gekennzeichnet,** daß ein gewellter Federscheiben-Außenring (11) mittels über seinen Umfang verteilter Verbindungsstege (13;14;15) mit einem inneren Federscheiben-Zentrierring (12) verbunden ist, über den die gesamte Federscheibe (1) an der Welle (2) zentrierbar ist.

2. Lageranordnung nach Anspruch 1, **dadurch gekennzeichnet,** daß die Federscheibe (1) mit ihrem gewellten Federscheiben-Außenring (11), ihrem inneren Federscheiben-Zentrierring (12) und den Verbindungsstegen (13;14;15) als einstückiges Stanz-Biege-Teil ausgebildet ist.

3. Lageranordnung nach Anspruch 1 und/oder 2, **dadurch gekennzeichnet,** daß der innere Federscheiben-Zentrierring (12) ungewellt im Sinne einer planen axialen Anlage ausgebildet ist.

4. Lageranordnung nach einem der Ansprüche 1 bis 3, **dadurch gekennzeichnet,** daß der innere Federscheiben-Zentrierring (12) axial gegenüber dem gewellten Federscheiben-Außenring (11) vorsteht.

5. Lageranordnung nach einem der Ansprüche 1 bis 4, **dadurch gekennzeichnet,** daß der Federscheibe (1) an der aufnehmenden Lagernabe (4) eine trichterförmig erweiterte Fase zugeordnet ist.

6. Lageranordnung nach einem der Ansprüche 1 bis 5, **gekennzeichnet** durch derartige Durchmessermaße der Federscheibe (1), daß die Differenz zwischen dem Innendurchmesser des inneren Federscheiben-Zentrierringes (12) und dem Außendurchmesser der Welle (2) größer ist als die Differenz zwischen dem Innendurchmesser der die Federscheibe umfassenden Lagernabe (4) und dem Außendurchmesser des Federscheiben-Außenringes (11).

7. Lageranordnung nach einem der Ansprüche 1 bis 6, **gekennzeichnet** durch die Anwendung auf einen Motor in axial-vertikaler Aufbaumontage, bei der in eine erste untere Lagernabe (3) ein erstes unteres Kugellager (5), in dieses erste Kugellager (5) das eine untere Wellenende (21) eines Rotors eingesteckt sowie auf das andere obere Wellenende (22) des Rotors das andere obere Kugellager (6), die an der Welle (2) mit ihrem inneren Federscheiben-Zentrierring (12) zentrierbare Federscheibe (1) und über das obere Kugellager (6) und die Federscheibe (1) die zweite, obere Lagernabe (4) aufgesteckt sind.

## Claims

1. A bearing arrangement with an undulated spring plate (1) for axial bracing of a ball bearing (6), which lies radially outwards with its bearing outer ring resting on a bearing hub (4) and radially inwards with its bearing inner ring resting on a shaft (2),
characterised in that an undulated spring plate-outer ring (11) is connected by means of connecting cross-pieces (13;14;15), distributed over its periphery, to an inner spring plate-centering ring (12), by way of which the whole spring plate (1) is able to be centred on the shaft (2).

2. A bearing arrangement according to claim 1, characterised in that the spring plate (1) with its undulated spring plate-outer ring (11), its inner spring plate-centering ring (12) and the connecting cross-pieces (13;14;15) is formed as a one-piece punch-bend-part.

3. A bearing arrangement according to claim 1 and/or 2, characterised in that the inner spring plate-centering ring (12) is not undulated in the sense of a flat axial bearing.

4. A bearing arrangement according to one of claims 1 to 3, characterised in that the inner spring plate-centering ring (12) projects axially relative to the undulated spring plate-outer ring (11).

5. A bearing arrangement according to one of claims 1 to 4, characterised in that associated with the spring plate (1) on the receiving bearing hub (4) there is a funnel-shaped extended bevel.

6. A bearing arrangement according to one of claims 1 to 5, characterised by such diameter dimensions of the spring plate (1), that the difference between the inner diameter of the inner spring plate-centering ring (12) and the outer diameter of the shaft (2) is greater than the difference between the inner diameter of the bearing hub (4) embracing the spring plate and the outer diameter of the spring plate-outer ring (11).

7. A bearing arrangement according to one of claims 1 to 6, characterised by the use on a motor in axially-vertically mounted assembly in which a first lower ball bearing (5) is inserted into a first lower bearing hub (3), [and] into this first ball bearing (5) is inserted the one lower shaft end (21) of a rotor, and mounted on the other upper shaft end (22) of the rotor are the other upper ball bearing (6), the spring plate (1) able to be centred on the shaft (2) with its inner spring plate-centering ring (12), and by way of the upper ball bearing (6) and the spring plate (1), the second upper bearing hub (4).

## Revendications

1. Palier comprenant une rondelle élastique (1) ondulée, pour le blocage axial d'un roulement à billes (6) qui s'applique radialement à l'extérieur, par sa bague extérieure de roulement, contre un moyeu de palier (4) et radialement à l'intérieur, par sa bague intérieure de roulement, contre un arbre (2), caractérisé en ce qu'une bague extérieure (11) en forme de rondelle élastique est reliée, au moyen de barrettes de liaison réparties sur son pourtour, à une bague intérieure de centrage (12) en forme de rondelle élastique, par laquelle toute la rondelle élastique (1) peut être centrée sur l'arbre (2).

2. Palier suivant la revendication 1, caractérisé en ce que la rondelle élastique (1) avec sa bague extérieure (11) ondulée en forme de rondelle élastique, sa bague intérieure de centrage (12) en forme de rondelle élastique et les barrettes de liaison (13,14,15), est constituée sous la forme d'une seule pièce obtenue par estampage-cintrage.

3. Palier suivant la revendication 1 et/ou 2, caractérisé en ce que la bague intérieure de centrage (12) en forme de rondelle élastique n'est pas ondulée en vue de son application axiale suivant une surface plane.

4. Palier suivant l'une des revendications 1 à 3, caractérisé en ce que la bague intérieure de centrage (12), en forme de rondelle élastique, déborde axialement par la bague extérieure (11) ondulée en forme de rondelle élastique.

5. Palier suivant l'une des revendications 1 à 4, caractérisé en ce qu'à la rondelle élastique (1) est associé, sur le moyeu de palier (4) de réception, un biseau s'élargissant en forme d'entonnoir.

6. Palier suivant l'une des revendications 1 à 5, caractérisé par des dimensions du diamètre de la rondelle élastique (1) telles que la différence entre le diamètre intérieur de la bague intérieure de centrage (12), en forme de rondelle élastique, et le diamètre extérieur de l'arbre (2) est supérieure à la différence entre le diamètre intérieur du moyeu de palier (4) entourant la rondelle élastique et le diamètre extérieur de la bague extérieure (11) en forme de rondelle élastique.

7. Palier suivant l'une des revendications 1 à 6, caractérisé par son utilisation sur un moteur à montage axial vertical, dans lequel, dans un premier moyeu de palier inférieur (3), est enfilé un premier roulement à billes inférieur (5), dans ce premier roulement à billes (5) est enfilée l'extrémité inférieure (21) de l'arbre d'un rotor, tandis que sur l'autre extrémité supérieure (22) de l'arbre du rotor, sont enfilés l'autre roulement à billes supérieur (6), la rondelle élastique (1), qui peut être centrée sur l'arbre (2) par sa bague de centrage intérieure (12) en forme de rondelle élastique, et au-dessus du roulement à billes supérieur (6) et de la rondelle élastique (1), le second moyeu de palier supérieur (4).

FIG 1

FIG 2

FIG 4

FIG 3